# EUROPÄISCHE PATENTSCHRIFT

(11) **EP 1 410 895 B1**
(45) Veröffentlichungstag und Bekanntmachung des Hinweises auf die Patenterteilung: **27.07.2005**
(21) Anmeldenummer: 03018554.0
(22) Anmeldetag: 18.08.2003
(51) Int. Cl.: B29C 51/42

(54) **Membranthermoformstation mit Heiz oder Kühleinrichtung**
Diaphragm thermoforming station with heating or cooling device
Dispositif pour thermoformage forme avec une membrane et système de chauffage ou réfroidissement

(30) Priorität: 16.10.2002 DE 20215921 U
(43) Veröffentlichungstag der Anmeldung: 21.04.2004
(73) Patentinhaber: ELKOM-Elektroheizplatten-Technik GmbH, 32547 Bad Oeynhausen (DE)
(72) Erfinder: Walther, Peter, 32479 Hille (DE)
(74) Vertreter: KEIL & SCHAAFHAUSEN

(56) Entgegenhaltungen:
- EP-A- 0 450 482
- DE-B- 1 183 353
- DE-U- 29 713 665
- US-A- 3 319 295

## Beschreibung

Die Erfindung bezieht sich auf eine Formstation zum Warmumformen von insbesondere plattenförmigen polymergebundenen Kunststoffen, Thermoplasten, Mineralkunststoffen etc. zu dreidimensionalen Formkörpern mit einem Rahmen, in welchem eine Formeinrichtung aufgenommen ist, in der wenigstens eine Formhälfte zur Aufnahme des zu formenden Materials, eine über die Formhälfte spannbare, im Wesentlichen gasundurchlässige, elastisch dehnbare Membran und Mittel zum Erzeugen einer Druckdifferenz zwischen den beiden Seiten der Membran angeordnet sind.

Plattenförmiges Material aus Kunststoff wird bisher bspw. dadurch zu einem Formkörper verpresst, dass es zwischen zwei Werkzeugen aus Metall oder Holz dem Druck einer hydraulischen Presse ausgesetzt wird. Dieses Verfahren ist teuer, da die Werkzeuge sehr stabil gebaut und äußerst genau in der Oberfläche sein müssen. Überwiegend werden dabei Aluminiumformen mit polierten Oberflächen eingesetzt. Aufgrund der hohen Kosten eignet sich diese Pressverformung nur für die Fertigung großer Serien, bspw. bei Waschbecken.

Eine preiswertere Alternative zu diesem Pressverformen stellt das Vakuumverformen dar. Hierbei wird das plattenförmige Material in der Formeinrichtung einem Unterdruck ausgesetzt und dadurch in eine Formhälfte gedrückt. Vorteilhaft sind hierbei die leichte Anwendung, die geringen Werkzeugkosten und damit die Möglichkeit, auch kleinere Serien oder Einzelstücke kostengünstiger herstellen zu können. In jüngster Zeit werden vor allem für Sanitärartikel, wie Badewannen, Spülbecken, Waschbecken, Waschtische, Verkleidungen, Blenden, aber auch für Möbelteile, Arbeitsflächen, Fensterbänke und dgl. sogenannte Mineralkunststoffe eingesetzt, die bspw. unter den Marken "Corian" von Dupont oder "Quaryl" von Villeroy & Boch auf dem Markt sind.

Eine Vorraussetzung für die Vakuumverformung derartiger Kunststoffe ist, dass diese ausreichend erwärmt werden, bevor sie dem Formgebungsprozess unterworfen werden, um ihre plastische Verformbarkeit zu erhöhen. Bei einer Erwärmung innerhalb des Vakuumformgerätes steigen jedoch die Taktzeiten für die Fertigung derartiger dreidimensionaler Formkörper erheblich an, so dass eine wirtschaftliche Fertigung von Serienprodukten mit diesem Verfahren nur schwer möglich ist.

Alternativ hierzu ist es bekannt, die zu verformenden plattenförmigen Kunststoffe zunächst in einer gesonderten Vorheizstation auf eine für die Verformung geeignete Temperatur vorzuwärmen und erst dann in das Vakuumformgerät einzulegen. Derartige Vorheizstationen sind separate Geräte, die möglichst in der Nähe des Vakuumformgerätes aufgestellt werden. Hierdurch sind in dem Vakuumformgerät selbst deutlich kürzere Taktzeiten erzielbar. Nachteilig bei diesem Verfahren ist jedoch, dass die erwärmten, vergleichsweise weichen Kunststoffplatten aus der Vorheizstation in das Vakuumformgerät transportiert werden müssen, wobei zwangsläufig eine Abkühlung der Kunststoffplatten erfolgt. Zudem sind auch Beschädigungen der erwärmten Kunststoffplatten während des Transports möglich. Weiter steigt der Raumbedarf bei diesem Verfahren erheblich an, da zwei getrennte Vorrichtungen zum Erwärmen und Umformen der Kunststoffplatten vorzuhalten sind.

Aus der EP 0 450 482 ist eine Vorrichtung mit einer Presse nach dem Oberbegriff des Anspruchs 1 bekannt, der eine Heizstation mit zwei Heizplatten vorgeschaltet ist. Zur Verformung der in der Heizstation erwärmten Bauteile werden diese in der seitlich neben der Heizstation angeordneten Formstation zwischen einer Oberform und einer Unterform verpresst.

Aufgabe der vorliegenden Erfindung ist es daher, eine Formstation der eingangs genannten Art bereitzustellen, in welcher dreidimensionale Formkörper in kurzen Taktzeiten herstellbar sind, wobei die oben genannten Nachteile der bekannten Verfahren vermieden werden sollen.

Diese Aufgabe wird erfindungsgemäß durch eine Formstation nach dem kennzeichnenden Teil des Anspruchs 1 gelöst, in deren Rahmen von der Formeinrichtung getrennt zusätzlich eine Heizeinrichtung mit zwei plattenförmigen Heizelementen zum Vortemperieren des zu formenden Materials vorgesehen ist, welche in zwei zueinander im Wesentlichen senkrechte Richtungen relativ zueinander bewegbar sind.

Dabei ist erfindungsgemäß die von der Formeinrichtung getrennte erste Heizeinrichtung mit den zwei plattenförmigen Heizelementen vertikal unterhalb der Formeinrichtung in dem Rahmen angeordnet. Die Formeinrichtung befindet sich dabei in einer ergonomisch günstigen Position, die eine gute Bedienbarkeit der Formstation sicherstellt. Die direkt unterhalb der Formeinrichtung angeordnete Heizeinrichtung ist dabei ebenfalls für eine Bedienperson gut zugänglich. Bei der Anordnung der Formeinrichtung und der Heizeinrichtung übereinander wird zudem die für die Aufstellung der Formstation erforderliche Grundfläche minimiert.

Durch den erfindungsgemäßen Aufbau der Formstation wird somit erstmals in einem Rahmen übereinander angeordnet eine Formeinrichtung und eine Heizeinrichtung miteinander kombiniert. Der Platzbedarf dieser Formstation ist folglich nahezu identisch mit dem einer herkömmlichen Vakuumformeinrichtung ohne zusätzliche Heizeinrichtung. Zudem ermöglicht die Anordnung einer zusätzlichen Heizeinrichtung in dem Rahmen der Formeinrichtung ein Erwärmen des zu formenden Materials vor dem eigentlichen Umformvorgang. Dabei ist es nun nicht mehr erforderlich, das zu formende Material bzw. das abgeformte Formteil über lange Strecken zu transportieren. Vielmehr kann das zu formende Material bzw. der Formkörper auf kürzestem Wege aus der Heizeinrichtung in die Formeinrichtung verbracht werden. Die von der Formeinrichtung getrennte Anordnung der Heizeinrichtung in dem Rahmen ermöglicht es darüber hinaus, dass die beiden Einrichtungen unabhängig voneinander bspw. zu Wartungs- oder Reparaturzwecken aus dem Rahmen ausgebaut werden können. Unter einer Heizeinrichtung im Sinne der vorliegenden Erfindung wird eine Einrichtung verstanden, die zumindest zum Erwärmen des zu formenden Materials geeignet ist. Zusätzlich kann diese Heinzeinrichtung ggf. auch zum Abkühlen des Formteils nach dem Vakuumformgebungsprozess eingesetzt werden, falls die Heizelemente auch kühlbar sind.

Nach einer bevorzugten Ausführungsform der Erfindung ist eines der plattenförmigen Heizelemente als ein Schubtisch ausgebildet, der in horizontaler Richtung aus dem Rahmen zur Aufnahme des zu formenden Materials ausziehbar ist. Das Einbringen von Gegenständen in die Heizeinrichtung wird dadurch erheblich erleichtert.

In Weiterbildung dieses Gedankens ist es vorgesehen, eines der plattenförmigen Heizelemente in vertikaler Richtung in dem Rahmen verfahrbar anzuordnen. Der zu temperierende Gegenstand lässt sich auf diese Weise dicht an die beiden Heizelemente annähern, so dass eine rasche Erwärmung oder ggf. Abkühlung möglich ist.

Eine besonders wirtschaftliche Ausgestaltung der Formeinrichtung der Formstation wird erreicht, wenn die Druckdifferenz zwischen den beiden Seiten der Membran durch eine Vakuumpumpe erzeugt wird. Zusätzlich oder alternativ hierzu kann die Membran auch einseitig mit Druckluft oder dgl. beaufschlagt werden.

Vorzugsweise ist in dem Rahmen eine weitere Heizeinrichtung vorgesehen, die der Formeinrichtung zugeordnet ist. Damit ist es möglich, auch während des Formgebungsprozesses in der Formeinrichtung das zu formende Material zur Erhöhung der Umformbarkeit zu erwärmen oder ggf. bereits während des Formgebungsvorganges abzukühlen.

Im folgenden wird die Erfindung anhand eines Ausführungsbeispiels und unter Bezugnahme auf die Zeichnung näher erläutert.

Es zeigen:
- Fig. 1: die geschlossene Formstation in einer Schnittansicht von der Seite und
- Fig. 2: die geöffnete Formstation in einer Schnittansicht von der Seite.

Die in den Figuren dargestellte Formstation 1 weist einen Rahmen 2 auf, in welchem eine Formeinrichtung 3 sowie unterhalb der Formeinrichtung 3 eine Heizeinrichtung 4 angeordnet sind.

Die Formeinrichtung 3 ist als eine Vakuumformeinrichtung mit einer Vakuumpumpe 5 ausgebildet. Die Vakuumpumpe 5 ist über Saugleitungen mit mehreren Kanälen einer Saugplatte 6 verbunden. Auf der Saugplatte 6 können Formhälften (nicht abgebildet) angeordnet werden, um einem zu formenden Material die gewünschte Kontur zu verleihen. Über einen vorzugsweise verwindungssteifen Vakuumrahmen 7, der schwenkbar an dem Rahmen 2 befestigt ist, ist eine im Wesentlichen gasundurchlässige und elastisch dehnbare Membran 8 gespannt. Wird nun durch die Vakuumpumpe 5 ein Unterdruck in der Saugplatte 6 erzeugt, so wird die Membran 8 durch das Vakuum fest auf eine auf der Saugplatte 6 angeordnete Formhälfte und ein darauf angeordnetes zu formendes Material gepresst, wodurch ein dreidimensionaler Formkörper erzeugt wird.

Die Heizeinrichtung 4 ist mit einer oberen Heizplatte 9 und einer unteren Heizplatte 10 ausgestattet. Die obere Heizplatte 9 lässt sich bspw. mittels pneumatischen Kurzhubzylindern 11 relativ zu der unteren Heizplatte 10 in vertikaler Richtung in dem Rahmen 2 verschieben. Die obere Heizplatte 9 kann somit auf ein auf der unteren Heizplatte 10 abgelegtes plattenförmiges Kunststoffmaterial abgesenkt werden, wodurch dieses plan niedergehalten wird. Um zu vermeiden, dass das plattenförmige Kunststoffmaterial hierbei gepresst wird, ist es möglich, die Materialdicke mittels Einstellschrauben vorzujustieren, so dass die obere und untere Heizplatte nur auf einen vorbestimmten Abstand aneinander angenähert werden können.

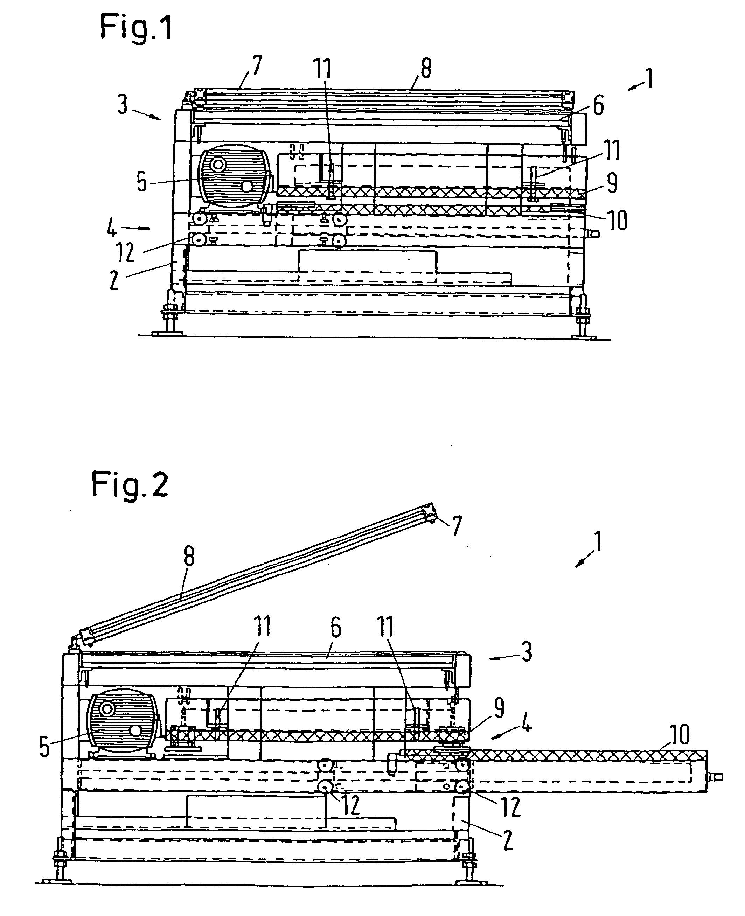

Die untere Heizplatte 10 ist auf mehreren Laufrollen 12 gelagert und dadurch als ein Schubtisch in horizontaler Richtung aus dem Rahmen 2 aus der in Fig. 1 dargestellten Position in die in Fig. 2 dargestellte Position ausziehbar. Eine zu erwärmende Kunststoffplatte lässt sich somit einfach auf die untere Heizplatte 10 auflegen und in die Heizeinrichtung 4 einfahren. Die Heizeinrichtung 4 ist dabei gleichermaßen zum Erwärmen eines Werkstückes vor dem Formgebungsprozess oder ggf. zum Abkühlen eines Formkörpers nach dem Formgebungsprozess geeignet.

Die Herstellung eines dreidimensionalen Formkörpers bspw. aus einer Mineralkunststoffplatte erfolgt in der Formstation 1, indem zunächst die als Schubtisch ausgebildete untere Heizplatte 10 aus dem Rahmen 2 ausgezogen wird, so dass die Platte aus Mineralkunststoff auf diese aufgelegt werden kann. Sowohl die obere als auch die untere Heizplatte 9, 10 sind beheizt, so dass nach dem Einschieben der Mineralkunststoffplatte auf der unteren Heizplatte 10 das zu formende Material erwärmt wird. Hierzu wird die obere Heizplatte 9 abgesenkt, so dass die Wärme beidseitig auf die Mineralkunststoffplatte einwirken kann.

Nach Ablauf der Vorwärmzeit wird die obere Heizplatte 9 durch die Kurzhubzylinder 11 angehoben und die untere Heizplatte 10 kann aus dem Rahmen 2 herausgezogen werden. Die vorgewärmte Mineralkunststoffplatte wird dann auf eine Formhälfte auf der Saugplatte 6 aufgelegt und der Vakuumrahmen 7 mit der Membran 8 geschlossen. Sobald die Vakuumpumpe 5 ein Unterdruck erzeugt, wird die Membran 8 auf die erwärmte Mineralkunststoffplatte gepresst, um diese zu verformen. Gleichzeitig kann die Mineralkunststoffplatte dabei abgekühlt werden, so dass nach dem Ende des Formgebungsprozesses ein dreidimensionaler Formkörper abgekühlt und verfestigt aus der Formeinrichtung 3 entnehmbar ist.

### Bezugszeichenliste:

- 1: Formstation
- 2: Rahmen
- 3: Formeinrichtung
- 4: Heizeinrichtung
- 5: Vakuumpumpe
- 6: Saugplatte
- 7: Vakuumrahmen
- 8: Membran
- 9: obere Heizplatte
- 10: untere Heizplatte
- 11: Kurzhubzylinder
- 12: Rolle

## Patentansprüche

1. Formstation zum Warmumformen von insbesondere plattenförmigen polymergebundenen Kunststoffen, Thermoplasten, Mineralkunststoffen etc. zu dreidimensionalen Formkörpern, wie Badewannen, Spülbecken, Waschbecken, Waschtischen, Verkleidungen, Blenden, Möbelteilen, Arbeitsflächen, Fensterbänken und dgl. mit einer in einem Rahmen (2) aufgenommenen Formeinrichtung (3), in welcher wenigstens eine Formhälfte zur Aufnahme des zu formenden Materials angeordnet ist, wobei in dem Rahmen (2) von der Formeinrichtung (3) getrennt zusätzlich eine Heizeinrichtung (4) mit zwei plattenförmigen Heizelementen (9, 10) zum Vortemperieren des zu formenden Materials vorgesehen ist, welche in zwei zueinander im Wesentlichen senkrechte Richtungen relativ zueinander bewegbar sind, **dadurch gekennzeichnet, dass** in dem Rahmen (2) zusätzlich eine über die Formhälfte spannbare im Wesentlichen gasundurchlässige elastisch dehnbare Membran (8) und Mittel (5, 6) zum Erzeugen einer Druckdifferenz zwischen den beiden Seiten der Membran (8) angeordnet ist, wobei die erste Heizeinrichtung (4) mit den zwei plattenförmigen Heizelementen (9, 10) zum Vortemperieren des zu formenden Materials vertikal unterhalb der Formeinrichtung (3) in dem Rahmen (2) angeordnet ist.

2. Formstation nach Anspruch 1, **dadurch gekennzeichnet, dass** eines der plattenförmigen Heizelemente (9, 10) als Schubtisch (10) ausgebildet ist, der in horizontaler Richtung aus dem Rahmen (2) zur Aufnahme des zu formenden Materials ausziehbar ist.

3. Formstation nach Anspruch 1 oder 2, **dadurch gekennzeichnet, dass** eines der plattenförmigen Heizelemente (9, 10) in vertikaler Richtung in dem Rahmen (2) verfahrbar ist.

4. Formstation nach einem der vorhergehenden Ansprüche, **dadurch gekennzeichnet, dass** die Mittel (5, 6) zum Erzeugen einer Druckdifferenz zwischen den beiden Seiten der Membran (8) eine Vakuumpumpe (5) umfassen.

5. Formstation nach einem der vorhergehenden Ansprüche, **dadurch gekennzeichnet, dass** in dem Rahmen (2) eine weitere Heizeinrichtung vorgesehen ist, welche der Formeinrichtung (3) zugeordnet ist.

## Claims

1. Moulding station for warm reshaping of in particular plate-like polymer-bound plastics, thermoplastics, mineral plastics etc. to three-dimensional shaped bodies such as bath tubs, sinks, wash-basins, wash-stands, coverings, shields, furniture parts, working surfaces, window sills and the like, comprising included into a frame (2) a moulding device (3) in which at least one half of the mould is arranged to receive the material to be moulded, in the frame (2) additionally being provided separate from the moulding device (3) a heating device (4) having two plate-like heating elements (9, 10) for pre-heating the material to be moulded, which are movable relative to each other in directions essentially vertical to each other, **characterized in that** in the frame (2) there are arranged additionally an essentially gas-impermeable, elastically expandable membrane (8) which can be drawn over one half of the mould, and means (5, 6) for generating a pressure difference between the two sides of the membrane (8) wherein the first heating device (4) with the two plate-like heating elements (9, 10) for pre-heating the material to be moulded is arranged within the frame (2) vertically below the moulding device (3).

2. Moulding station according to claim 1, **characterized in that** one of the plate-like heating elements (9, 10) is designed as a push table (10) which can be drawn out in horizontal direction from the frame (2) to receive the material to be moulded.

3. Moulding station according to claim 1 or 2, **characterized in that** one of the plate-like heating elements (9, 10) is movable in the frame (2) in vertical direction.

4. Moulding station according to one of the preceding claims, **characterized in that** the means (5, 6) for generating a pressure difference between the two sides of the membrane (8) include a vacuum pump (5).

5. Moulding station according to one of the preceding claims, **characterized in that** in the frame (2) a further heat device is provided which is assigned to the moulding device (3).

## Revendications

1. Poste de moulage pour le thermoformage notamment de matières plastiques polymères en forme de plaques, de thermoplastiques, des matières plastiques minérales etc. pour obtenir des formes tridimensionnelles, telles que des baignoires, des éviers, des lavabos, des lavabos à plateau, des revêtements, des caches, des éléments de meuble, des surfaces de travail, des bancs de fenêtre et d'autres objets similaires, avec un dispositif de moulage (3) logé dans un cadre (2) dans lequel dispositif est disposé au moins une moitié du moule pour recevoir le matériau à former, un dispositif de chauffage (4), séparé du dispositif de moulage, avec des éléments de chauffage (9, 10) en forme de plaque pour prétempérer du matériau à former étant prévu dans le cadre (2) et pouvant être déplacés l'un par rapport à l'autre dans deux directions essentiellement perpendiculaires l'une à l'autre, **caractérisé en ce qu'**en outre une membrane (8) extensible élastiquement, essentiellement imperméable au gaz et pouvant être tendue au-dessus de la moitié de moule et des moyens (5, 6) pour réaliser une différence de pression entre les deux côtés de la membrane (8) sont disposés le cadre (2), le premier dispositif de chauffage (4) est disposé avec des deux éléments de chauffage (9, 10) en forme de plaque pour prétempérer le matériau à former est disposé verticalement en dessous du dispositif de moulage (3) dans le cadre (2).

2. Poste de moulage selon la revendication 1, **caractérisé en ce que** l'un des éléments de chauffage (9, 10) est conçu sous la forme d'une table en tiroir (10) qui peut être tirée vers l'extérieur du cadre (2) en direction horizontale pour recevoir le matériau à former.

3. Poste de moulage selon la revendication 1 ou 2, **caractérisé en ce que** l'un des élément de chauffage (9, 10) en forme de plaque peut être déplacé dans le cadre (2) en direction verticale.

4. Poste de moulage selon l'une des revendications précédentes, **caractérisé en ce que** les moyens (5, 6) pour réaliser une différence de pression entre les deux côtés de la membrane (8) comprennent une pompe à vide (5).

5. Poste de moulage selon l'une des revendications précédentes, **caractérisé en ce qu'**il est prévu dans le cadre (2) un dispositif de chauffage supplémentaire affecté au dispositif de moulage.
